# FASCICULE DE BREVET EUROPEEN

(11) **EP 0 738 049 B1**
(45) Date de publication et mention de la délivrance du brevet: **03.03.2004**
(21) Numéro de dépôt: 96200901.5
(22) Date de dépôt: 09.04.1996
(51) Int. Cl.: H04B 1/707

(54) **Récepteur de signal à spectre étalé utilisant un seuil de détection autoadaptatif**
Spreizspektrumsignalempfänger unter Verwendung einer selbsteinstellenden Detektionsschwelle
Spread spectrum signal receiver using an autoadaptive detection threshold

(30) Priorité: 14.04.1995 FR 9504516
(43) Date de publication de la demande: 16.10.1996
(73) Titulaire: AGENCE SPATIALE EUROPEENNE, F-75738 Paris Cedex 15 (FR)
(72) Inventeur: De Gaudenzi, Riccardo, 2313 ER Leiden (NL); Fanucci, Luca, 2202 KK Noordwijk (NL); Giannetti, Filippo, 56032 Buti, Pisa (IT); Luise, Marco, 57125 Livorno (IT)
(74) Mandataire: Vanderperre, Robert

(56) Documents cités:
- EP-A- 0 584 912
- DE-A- 3 922 972

## Description

La présente invention se rapporte aux systèmes de communications à accès multiple par division de code à spectre étalé à séquence directe et en particulier aux récepteurs de signal à spectre étalé utilisé dans ces systèmes. L'invention concerne plus particulièrement la reconnaissance du signal et l'acquisition du code utilisé dans la modulation du signal transmis.

Une technique rapide et fiable pour la reconnaissance du signal et l'acquisition du code peut se révéler un élément essentiel et crucial pour répondre aux spécifications fondamentales d'un système de communications, par exemple un système de communications radioélectriques terrestre ou par satellite.

Dans les systèmes de communications mobiles à accès multiple par division de code à séquence directe (DS-CDMA), les récepteurs les plus efficaces tirent parti de la diversité temporelle inhérente à un canal multi-voies en utilisant plusieurs récepteurs qui doivent suivre les différents échos arrivant à l'antenne par les multiples chemins de propagation. Cela demande une détection de signal et une synchronisation de code de signature rapides et fiables. De plus, dans un réseau à accès multiple par division de code organisé par liaisons avec affectation dynamique des sources, la station de base doit prévoir une acquisition rapide et fiable des paquets de signaux transmis de manière aléatoire par des usagers dispersés. Des exigences semblables affectent un réseau qui n'est pas organisé par liaison, dans lequel le temps d'acquisition du démodulateur de paquets de signaux a une influence immédiate sur le débit de données global.

Dans toutes ces situations, les processus de recherche série classiques qui utilisent une méthode de corrélation n'ont qu'un rendement faible évalué en temps d'acquisition pour des rapports signal/bruit faibles. Par contre, ces processus connus se sont jusqu'à présent caractérisés par un rapport coût/complexité beau-coup plus faible que les processus de recherche parallèle pour l'acquisition rapide de signaux de séquence directe. Toutefois, cette dernière considération est à l'heure actuelle partiellement évincée par les progrès réalisés dans les techniques de traitement numérique du signal et dans les technologies d'intégration à très grande échelle (VLSI).

Le procédé d'acquisition de signal à spectre étalé classique utilise dans le récepteur un processus de corrélation pour aligner le code entrant et le code généré localement. L'amplitude du signal entrant est comparée avec un seuil fixé et une impulsion de corrélation se trouve générée lorsque l'amplitude du signal entrant dépasse le seuil fixé. La publication DE-A-3922972 décrit un générateur d'impulsion de corrélation pour un récepteur de signal à spectre étalé.

Pour réduire le temps d'acquisition et accélérer ainsi la reconnaissance du signal, il est connu d'utiliser une technique de recherche parallèle. Un procédé d'acquisisition de code numérique rapide mettant en oeuvre un traitement parallèle se trouve décrit dans FR-A-8913360. Ce procédé est également basé sur un processus de corrélation à l'aide d'un grand nombre de corrélateurs en parallèle et il en résulte un dispositif relativement complexe et encombrant car ses performances ne sont pas aisément prévisibles. De plus, ce procédé a été conçu pour un système à spectre étalé TDRSS/DRS, mais il n'est pas optimisé pour un étalement synchronisé par bit utilisé dans les systèmes commerciaux actuels. Enfin, les pertes qu'entraîne le processus de corrélation sont inacceptables dans un système de communication par satellite.

Le but de l'invention est de réaliser un dispositif d'acquisition de code et de reconnaissance de signal qui puisse travailler de manière rapide et fiable avec des rapports signal/bruit faibles et qui soit susceptible d'être implémenté en un circuit intégré spécifique (ASIC)

Pour atteindre le but recherché, l'invention propose un dispositif de reconnaissance de signal et d'acquisition de code basé sur un processus d'acquisition parallèle non-cohérent utilisant un filtre adapté par code.

L'utilisation d'un filtre adapté par code pour remplacer le corrélateur classique a certes déjà été proposée par A. Polydoros et C.L. Weber (A Unified Approach to Serial Search Spread-Spectrum Code Acquisition - Part II : A Matched Filter Receiver, IEEE Transactions on Communications, Vol. COM-32, n° 5, mai 1984, pp. 550-560) et par L.B. Milstein, J. Gevargiz et P.K. Das (Rapid Acquisition for Direct-Sequence Spread-Spectrum Communications Using Parallel SAW Convolvers, IEEE Transactions on Communications, Vol. COM-33, n° 7, juillet 1985, pp. 593-600). Ces dispositifs ne conviennent cependant pas pour des rapports signal/bruit faibles.

Des propositions plus récentes ont été faites qui utilisent également un filtre adapté par code, mais aucune d'elles ne convient non plus pour travailler avec un rapport signal/bruit faible car la détection du signal est toujours basée sur la comparaison du niveau de sortie du filtre avec un niveau de seuil fixé.

La présente invention utilise une approche différente et propose un récepteur de signal à spectre étalé produit par modulation d'un signal électrique avec un code binaire, lequel récepteur comprend un démodulateur de signal précédé d'un circuit d'échantillonnage pour échantillonner le signal entrant et d'un circuit d'acquisition de code et de détection de signal. Ce dernier circuit comprend des moyens agencés pour reconnaître le signal de données reçu en comparant une valeur maximale représentative d'échantillons significatifs sélectionnés avec un seuil auto-adaptatif généré à partir de la valeur moyenne des échantillons par multiplication de ladite valeur moyenne avec un facteur de multiplication fixé afin de produire un signal, ayant un premier état indiquant la présence d'un signal lorsque la valeur maximum précitée est supérieure audit seuil auto-adaptatif et un second état indiquant l'absence de signal dans le cas contraire.

Dans un mode de réalisation, le circuit d'acquisition de code et de détection comporte un filtre adapté par code pour fournir des échantillons corrélés du signal entrant. Des moyens traitent les échantillons de manière non cohérente et fournissent des échantillons consécutifs, puis des moyens évaluent la moyenne des composantes des échantillons dans une fenêtre d'égalisation glissante de largeur prédéterminée, et enfin des moyens évaluent la valeur maximum des groupes d'échantillons significatifs sélectionnés. Un générateur de répliques de code génère des répliques du code en synchronisme avec le début estimé des signaux de déphasage de code.

Le circuit d'acquisition et de détection suivant l'invention peut desservir plusieurs démodulateurs par paquets, ce qui permet d'optimiser la vitesse de traitement des données. Dans ce cas, le circuit comporte un moyen pour désétaler les données avant de les acheminer vers les démodulateurs par paquets.

Le seuil de détection auto-adaptatif, généré à partir du signal de sortie du circuit de détection, assure un processus de reconnaissance de signal auto-adaptatif qui tient directement compte des fluctuations éventuelles de l'amplitude du signal. Grâce à ce seuil auto-adaptatif, la probabilité de détection manquée se trouve minimisée tout en maintenant la probabilité de fausse détection constante en fonction du rapport signal/bruit. De plus, le dispositif d'acquisition et de détection suivant l'invention s'est avéré remarquablement précis et fiable en ce qui concerne la production du drapeau de présence de signal. Il n'introduit que de faibles pertes et permet un débit de données élevé aussi bien en mode de transmission par accès aléatoire qu'en mode de transmission par paquets. Enfin, la possibilité de le réaliser en technologie intégrée ASIC assure avec avantage une complexité matérielle réduite.

L'invention est exposée plus en détails dans ce qui suit à l'aide des dessins ci-annexés.
La figure 1 est un schéma par blocs d'un récepteur conforme à l'invention.
La figure 2 est un schéma par blocs d'un récepteur conforme à l'invention, configuré pour une démodulation par paquets.
La figure 3 montre un schéma fonctionnel du circuit d'acquisition et de détection suivant l'invention.
La figure 4 illustre l'architecture d'un mode de réalisation intégré pour le circuit d'acquisition et de détection suivant l'invention.
Les figures 5 à 11 sont des schémas par blocs des sous-ensembles composant le mode de réalisation illustré en figure 4.

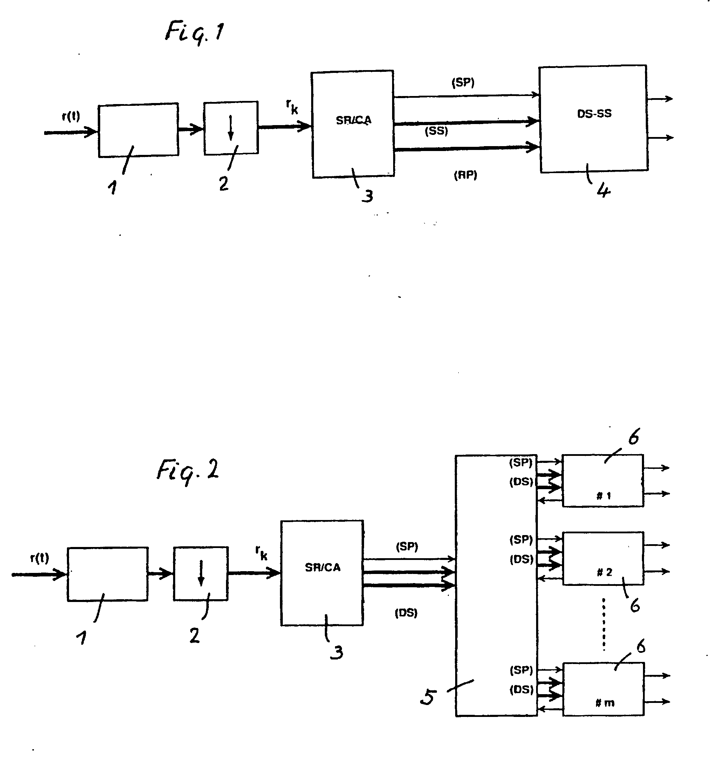

En figure 1 est représenté schématiquement un récepteur de signal conforme à l'invention. Le filtre de bande 1 reçoit le signal d'entrée en bande de base r(t) et la sortie du filtre est échantillonnée de manière asynchrone dans l'échantillonneur 2 à une cadence prédéterminée. L'échantillonneur 2 fournit deux ou plusieurs échantillons rₖ par puce. Le filtre 1 peut être réalisé sous forme analogique ou numérique par l'homme du métier en s'appuyant sur ses connaissances normales. Les échantillons rₖ sont reçus dans un circuit d'acquisition et de détection (SR/CA) 3 suivant l'invention dont le rôle est de détecter le signal à l'aide d'un code signature local et générer un signal drapeau SP indiquant la présence d'un signal dans un intervalle de temps donné et fixé. Lorsqu'un signal SP est détecté, le circuit de détection 3 produit une réplique de code RP synchronisée avec le flux d'échantillons SS.

L'ensemble des signaux produits par le circuit d'acquisition et de détection 3 est transmis au démodulateur 4, connu en soi. Celui-ci procède au désétalement du signal en utilisant les échantillons du signal et les répliques de code, d'une manière connue en soi.

Etant donné que la confirmation de la reconnaissance du signal exige normalement un temps plus long que le temps de réponse du circuit de détection 3, le montage permet de libérer immédiatement le circuit de détection dès que le signal drapeau SP indique que le message est terminé. Le circuit de détection 3 est ainsi directement disponible pour traiter un nouveau message.

La figure 2 représente une variante de récepteur de signal suivant l'invention destinée à la démodulation des données par paquets. Lorsque le circuit d'acquisition et de détection 3 détecte la présence d'un signal, il achemine le signal de présence SP et le signal d'entrée préalablement désétalé DS à l'aide de répliques de code vers une unité de service qui dessert plusieurs démodulateurs par paquets 6. L'unité de service 5 achemine le signal désétalé à la cadence de symbole vers le démodulateur par paquets disponible. Chaque démodulateur travaillant à la cadence de symbole assure la synchronisation de fréquence, de phase et d'encadrement et extrait ainsi les bits d'information des paquets. Afin de réduire la durée du préambule de paquet, le démodulateur par paquets pourrait traiter les échantillons de données en différé, ce qui demanderait alors un temps de traitement plus long que la durée d'un paquet. Dans ce cas aussi, le circuit d'acquisition et de détection 3 se trouve libéré dès que le signal drapeau de présence de signal SP indique que le message est terminé, ce qui rend ce circuit directement disponible pour traiter un nouveau message.

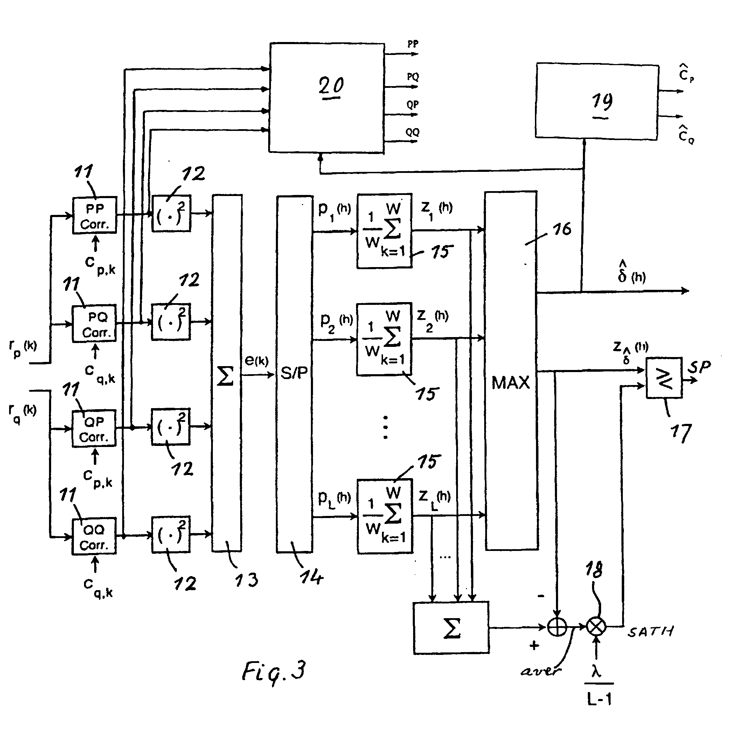

Le circuit d'acquisition et de détection est décrit plus en détails ci-après à l'aide du schéma fonctionnel de la figure 3. Les composantes en phase rₚ(k) et en quadrature r_{q}(k) des échantillons r(k) sont appliquées à plusieurs filtres adaptés par code 11 dont le rôle est d'effectuer la corrélation du signal entrant avec les codes d'étalement en phase et en quadrature de phase. Deux filtres sont représentés à titre d'exemple pour chaque composante de signal. Les échantillons S_{p,p}, S_{p,q}, S_{q,p} et S_{q,q} aux sorties des filtres 11 sont élevés au carré en 12 et additionnés en 13. Le signal résultant e(k) est indépendant de la modulation des données et du déphasage de la porteuse (traitement non cohérent).

Les échantillons consécutifs de e(k) sont la corrélation du signal reçu avec des versions progressivement décalées des codes d'étalement C_{P} et C_{Q}. La résolution du problème d'estimation peut être assurée en traitant les échantillons e(k) en parallèle. La valeur maximum de la fonction de probabilité peut être trouvée par une simple comparaison des valeurs différentes de e(k) calculées pour tous les déphasages possibles du code dans une période de code (L). Un convertisseur série/parallèle 14 fournit les composantes p₁(h) ... p_{L}(h) en parallèle. Ce convertisseur joue également le rôle d'un décimateur car les sorties sont mises à jour à une cadence imposée par la longueur du code. L'indice (h) dans l'identification des composantes représente l'indice de la période de code en cours. Afin d'obtenir une moyenne significative des échantillons, chaque composante p(h) traverse une fenêtre glissante 15 de longueur W. On obtient ainsi un ensemble de L signaux représentant L groupes d'échantillons significatifs Z(h).

Les groupes d'échantillons Z(h) sont ensuite évalués dans un circuit d'évaluation 16 ayant pour fonction de fournir une indication δ̂(h) de la valeur provisoire du déphasage du code pour la démodulation subséquente, et fournir la valeur maximale des L groupes d'échantillons significatifs. Un circuit de détection 17 compare ensuite cette valeur maximale avec un seuil auto-adaptatif SATH généré localement par multiplication en 18 de la moyenne des échantillons avec un facteur de multiplication Lambda et produit le drapeau de présence de signal SP lorsque la valeur maximale précitée dépasse le seuil SATH. La valeur provisoire δ(h) du déphasage du code est utilisée dans un générateur de code 19 pour synchroniser la génération des répliques Ĉₚ et Ĉ_{q} du code. Le cas échéant, comme représenté sur la figure 3, le circuit d'acquisition et de détection comprend également un circuit désétaleur de données 20 qui désétale les données d'entrée avec les répliques de code Ĉₚ et Ĉ_{q} acquises.

Le schéma fonctionnel décrit ci-dessus suppose un mode de traitement sur la base d'un échantillon par puce. Cependant, il est possible à l'homme du métier d'adapter le mode de réalisation de l'invention à un traitement sur base de plusieurs échantillons par puce, par exemple deux ou quatre échantillons par puce, ce qui permet de minimiser les pertes de désétalement des données par un traitement par paquets.

Le but du circuit d'acquisition SR/CA est de reconnaître un signal provenant d'un usager particulier parmi les signaux provenant de plusieurs usagers. A cet effet, le circuit d'acquisition doit effectuer sur les échantillons un test non-cohérent basé sur le taux de probabilité de deux hypothèses différentes : absence de signal et présence de signal. Ce test consiste fondamentalement à comparer le niveau estimé du signal avec un seuil fixé. Afin de réduire autant que possible la charge de calcul pour la reconnaissance du signal et se débarrasser d'un risque de dégradation du rendement par suite de variations rapides inattendues de l'amplitude du signal, au lieu d'effectuer le test sur le signal reçu rₖ ainsi qu'il est usuel, l'invention prévoit d'effectuer ce test sur la sortie Z(h) du circuit d'acquisition. Cette façon de procéder conformément à l'invention permet de réutiliser le circuit de détection lui-même à cet effet et de réaliser un processus auto-adaptatif simple qui tient directement compte des fluctuations éventuelles de l'amplitude du signal.

Pour ce faire, la valeur maximale sélectionnée dans les échantillons Z(h) est comparée à un seuil auto-adaptatif SATH généré localement en multipliant la valeur moyenne AVER avec un facteur de multiplication Lambda prédéterminé.

Dans le processus de reconnaissance conforme à la présente invention, les deux paramètres clés qui influencent de manière significative les performances globales du circuit sont la longueur W de la fenêtre d'égalisation et le facteur de multiplication Lambda qui fixe le seuil de détection auto-adaptatif.

Grâce à un seuil de détection auto-adaptatif, la probabilité de fausse détection est indépendante du rapport signal/bruit réel. La probabilité de détection manquée est une fonction monotonique décroissante du rapport signal/bruit, sa valeur étant inférieure à celle qui résulte du critère Neyman-Pearson optimal. Cette particularité est très utile en mode de traitement par paquets pour lequel les probabilités de fausse détection et de détection manquée doivent être inférieures à une valeur spécifiée. Une détection manquée résulte en effet en une perte d'un paquet de données. Les paramètres Lambda et W du circuit sont sélectionnés pour satisfaire aux exigences quant aux probabilités de détection manquée (PMD), de fausse acquisition (PFA) et d'acquisition de phase erronée (PWA) pour le rapport signal/bruit le plus mauvais et la plus mauvaise latence de détection de signal. Pour un meilleur rapport signal/bruit, les probabilités PMD et PWA seront supérieures à la valeur maximale spécifiée tandis que la probabilité PWA et la latence resteront inchangées.

Outre ses performances évaluées en vitesse d'acquisition et de reconnaissance du signal et en fiabilité de détection, le circuit suivant l'invention présente l'avantage de pouvoir être réalisé en technologie ASIC.

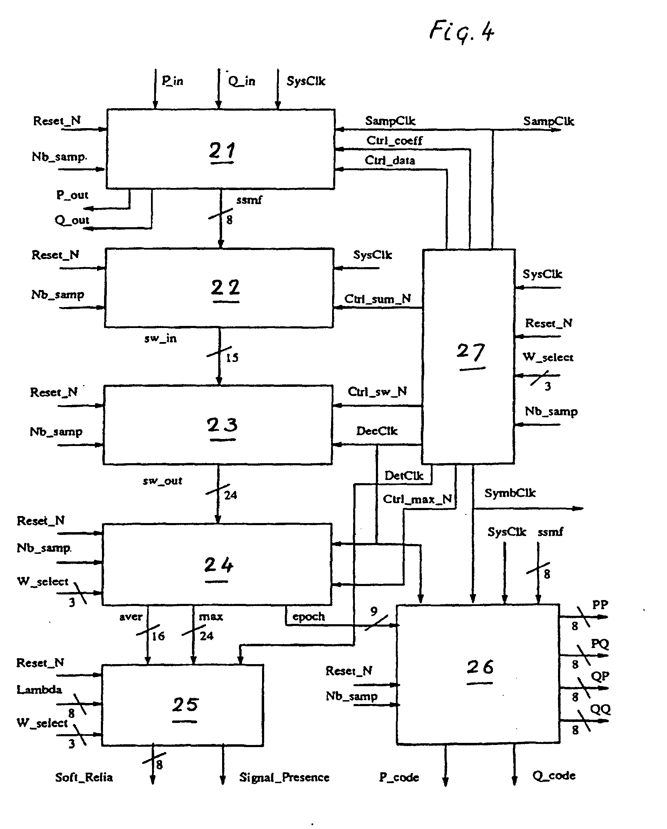

La figure 4 représente un schéma par blocs de l'architecture d'un mode de réalisation en technologie ASIC. Les signaux d'entrée sont le bit de plus fort poids P_in de la composante en phase du signal de sortie du filtre d'entrée et le bit de plus fort poids Q_in de la composante en quadrature de phase du signal de sortie du filtre d'entrée. Ce mode de réalisation, applicable à n'importe quel code pseudo-bruit (PN), a été conçu pour démoduler un signal de type QPSK DS/SS CDMA avec des séquences conformées par un filtre cosinus racine carrée de Nyquist ayant un facteur de discrimination de 0,4.

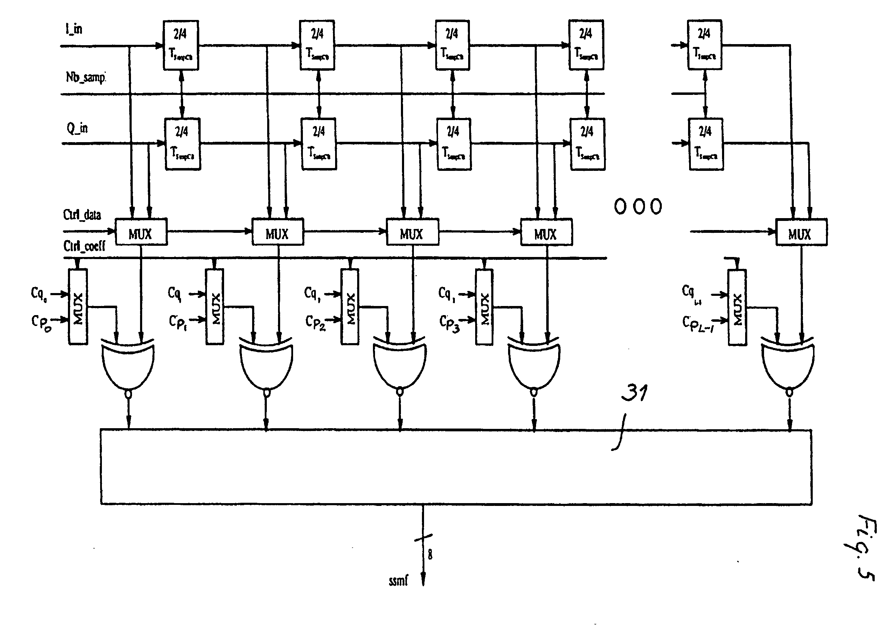

Pour la clarté de l'exposé, la description qui suit est faite en considérant le traitement d'un échantillon par puce, étant cependant entendu que la réalisation du circuit a été faite en prévoyant son utilisation pour le traitement d'un plus grand nombre d'échantillons par puce (par exemple deux ou quatre échantillonss par puce) moyennant des modifications mineures. La figure 4 se complète des figures 5 à 11 qui représentent les sous-ensembles que constituent les blocs fonctionnels montrés en figure 4. Sur les figures complémentaires précitées sont indiquées les longueurs sélectionnées pour les mots binaires internes. Ces longueurs ont été sélectionnées à la suite d'une analyse visant à assurer un compromis acceptable entre la complexité du circuit et les performances du récepteur.

Le bloc 21 réalise la filtration étalée des composantes P et Q du signal d'entrée à l'aide de deux codes Gold à phase préférentielle servant de séquences de signature.

Ces codes signatures sont désignés par C_{P} et C_{Q} sur la figure 5 qui représente un schéma simplifié du bloc de filtration. Un signal extérieur Nb-samp fixe le nombre d'échantillons par puce. Grâce à un contrôle judicieux du flux de données entrantes et des séquences de signatures, la filtration est réalisée au moyen d'un seul corrélateur de données au lieu de quatre, ce qui réduit considérablement la complexité du matériel puisque le nombre de portes pour réaliser un corrélateur complexe est de l'ordre de 10.000 (ce qui est approximativement le quart du nombre total de portes du circuit intégré spécifique). Ce circuit peut aisément être réalisé en technologie MOS complémentaire (CMOS). Les échantillons corrélés sont sériés à la sortie de l'additionneur 31 à la cadence d'horloge système FSysClk et représentés sur 8 bits (signal ssmf).

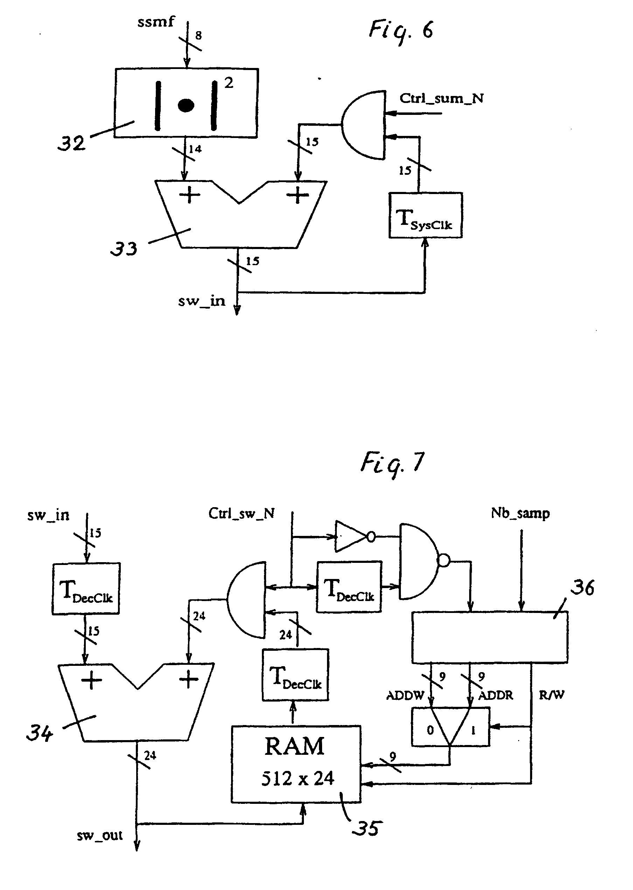

Les échantillons corrélés ssmf sont introduits dans le bloc de mise au carré et de sommation 22 dont un schéma de réalisation est représenté en figure 6. Par suite de l'organisation imbriquée des données, celles-ci se trouvent en série dans le temps de sorte qu'il est possible de réaliser la fonction à l'aide d'un dispositif de mise au carré 32 et d'un accumulateur 33 commandé adéquatement par le signal de commande de la somme Ctrl_sum_N. Le signal de sortie sw_in du bloc 22, représenté sur 15 bits, est acheminé vers la fenêtre d'égalisation glissante (bloc 23) à la cadence d'échantillonnage FsampClk = 1/4 FSysClk .

Le rôle du bloc 23 est d'effectuer l'égalisation des échantillons traités décrite plus haut. Au lieu d'effectuer une conversion série/parallèle suivie d'une égalisation comme schématisé sur la figure 3, le mode de réalisation représenté à la figure 7 réalise la fonction d'égalisation à l'aide d'un accumulateur 34 et d'un élément mémoire RAM 35, ce qui rend superflue la conversion série/parallèle. L'accès à la mémoire RAM se fait à la cadence double de la cadence des données de manière à permettre l'exécution d'une opération de lecture R et d'écriture W pendant un intervalle d'échantillon Tsamp = 1/FsampClk. L'initialisation de l'accumulateur et la commande des opérations de lecture/écriture R/W sont contrôlées par des signaux de commande appropriés(nombre d'échantillons par puce Nb_samp, adresse d'écriture ADDW, adresse de lecture ADDR, commande du nombre d'échantillons sélectionnés Crtl_sw_N). Les groupes d'échantillons sw_out sont fournis à la cadence FsampClk /(L*W) tandis que dans chaque groupe, la cadence des données est FsampClk.

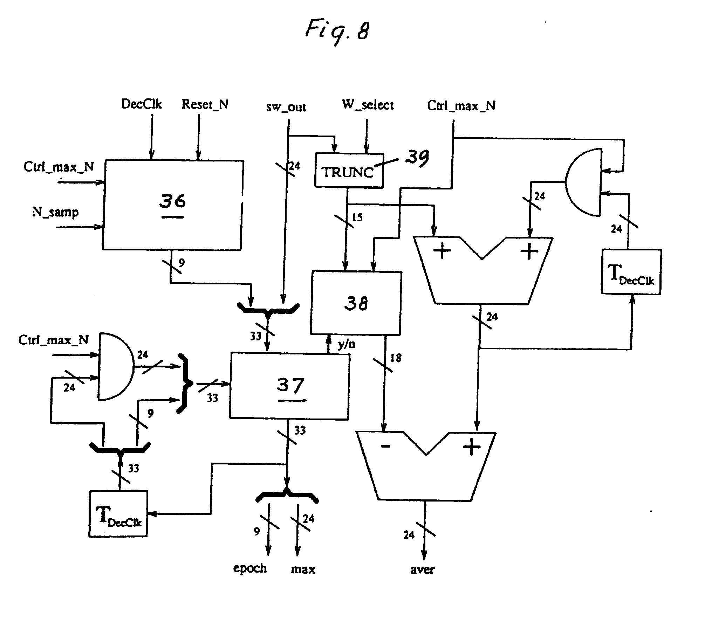

Les groupes d'échantillons sw_out sont reçus dans le bloc d'évaluation 24 dont un schéma d'architecture est représenté en figure 8. Les données entrantes sont d'abord marquées par l'information de phase connue du code, fournie par un compteur programmable 36 initialisé de façon convenable. L'évaluation du maximum est ensuite effectuée à l'aide d'un seul comparateur 37 et d'un élément mémoire 38 en mode récurrent. L'évaluation de la moyenne aver se fait en accumulant simplement les L-1 échantillons restants. Afin de réduire la complexité du circuit, l'évaluation de la moyenne est effectuée sur la sortie du bloc d'égalisation 23 tronquée à 15 bits. La troncation est réalisée en 39 en tenant compte de l'ouverture dynamique de la fenêtre glissante qui dépend de la période d'intégration W. En principe, pour obtenir le niveau de la moyenne, la sortie de l'accumulateur (fig. 3) devrait être multipliée par 1/(L-1). Toutefois, pour réduire la complexité du circuit, ce facteur de normalisation est pris en compte dans le bloc de détection avec ajustement par le facteur de multiplication Lambda. Les sorties du bloc 24 sont la phase estimée du code (epoch), la valeur maximale des L groupes d'échantillons sélectionnés (max) et la valeur moyenne des L groupes d'échantillons sélectionnés (aver). Ces signaux de sortie sont délivrés à la cadence FsampClk / (L*W).

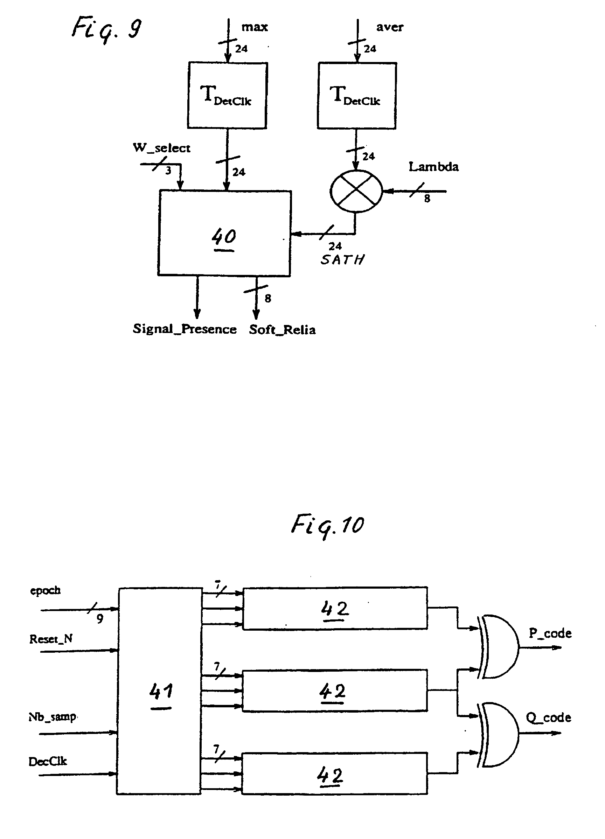

La détection finale du signal est effectuée dans le bloc 25 dont un mode d'exécution est représenté à la figure 9. La valeur maximale max est comparée en 40 à un seuil auto-adaptatif SATH généré par multiplication en 41 du signal de moyenne aver avec un facteur de multiplication Lambda. Un drapeau SP indiquant la présence d'un signal est produit par le comparateur 40 lorsque la valeur maximum max dépasse le seuil auto-adaptatif SATH. Une sortie additionnelle sur 8 bits (Soft_Relia) fournit une indication sur la fiabilité de la détection effectuée.

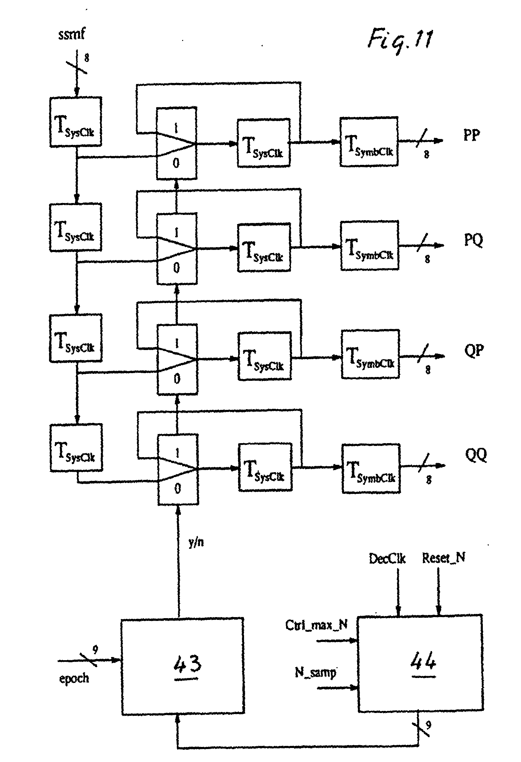

Le bloc 26 génère les codes Gold P et Q utilisés comme séquences de signature et produit les composantes désétalées du signal d'entrée. La figure 10 représente un circuit générateur de codes. Ce circuit comportant essentiellement des registres à décalage 41 et 42 génère les codes P et Q en synchronisme avec le début estimé de la phase du code (signal epoch). La figure 11 est un schéma par blocs d'un circuit désétaleur de données dans lequel le bloc 43 représente un comparateur et le bloc 44 représente un compteur programmable. Il est agencé pour sélectionner les échantillons ssmf qui apparaissent à la sortie du filtre 21 en synchronisme avec le signal epoch, c'est-à-dire en synchronisme avec les codes de signature et assurer la conversion série/parallèle des données désétalées. Les composantes PP, PQ, QP et QQ sont délivrées à la cadence des symboles sous le contrôle du compteur 44. Celui-ci est gouverné par un signal d'horloge de décalage DecClk et un signal de remise à zéro Reset_N.

Le bloc 27 génère tous les signaux de commande qui rythment le fonctionnement de l'ensemble du circuit. Il comporte essentiellement un compteur programmable qui peut être programmé pour différents nombres d'échantillons par puce et différentes longueurs W de fenêtre d'égalisation. Ce circuit est donc adaptable à diverses configurations du circuit d'acquisition et de détection.

Le mode de réalisation décrit dans ce qui précède est un exemple servant à illustrer les possibilités avantageuses que permet l'invention mais il est entendu que celle-ci n'est nullement limitée à ce mode de réalisation particulier. D'autres formes de réalisation sont de la compétene normale de l'homme du métier.

### Légende des dessins

P-in : Bit de plus fort poids dans la composante en phase P de la sortie du filtre adapté du démodulateur
Q-in : Bit de plus fort poids dans la composante en quadrature Q de la sortie du filtre adapté du démodulateur
W-select (3:0) : Sélection de la longueur de la fenêtre glissante (W=16, ...)
Lambda (7:0) : Facteur de multiplication de seuil
Nb-samples : Nombre d'échantillons par sélection de puce (0=2 échantillons par puce, 1=4 échantillons par puce)
Reset-N : Remise à zéro globale
Code-P : Séquence de code P synchrone au début d'époque estimé
Code-Q : Séquence de code Q synchrone au début d'époque estimé
Signal-Présence : Drapeau présence de signal
PP, PQ, QP, QQ : Données désétalées
P-out : Réplique retardée du signal d'entrée P-in
Q-out : Réplique retardée du signal d'entrée Q-in
SysClk : Signal d'horloge système
SampClk : Signal d'horloge d'échantillonnage
SymbClk : Signal d'horloge symboles
Ctrl-coeff : Commande du coefficient de multiplication
Ctrl-data : Commande données
Ctrl-sum-N : Commande globale de la somme
Ctrl-max-N : Commande globale du maximum
DecClk : Signal d'horloge de décalage
DetClk : Signal d'horloge de détection

## Revendications

1. Récepteur de signal à spectre étalé produit par modulation d'un signal électrique avec un code binaire,lequel récepteur comprend un circuit d'échantillonnage (2) pour échantillonner le signal à bande limitée, un circuit d'acquisition de code et de détection de signal (3) et un démodulateur de signal (4), **caractérisé en ce que** le circuit d'acquisition de code et de détection de signal (3) comprend des moyens (16) agencés pour reconnaître le signal de données reçu en comparant la valeur maximale (max) représentative d'échantillons significatifs (Z₁(h), ... Z_{L}(h)) sélectionnés avec un seuil auto-adaptatif (SATH) généré à partir de la valeur moyenne (AVER) des échantillons par multiplication de ladite valeur moyenne (AVER) avec un facteur de multiplication fixé (Lambda) afin de produire un signal (SP) ayant un premier état indiquant la présence d'un signal lorsque la valeur maximale (max) précitée est supérieure audit seuil auto-adaptatif (SATH) et un second état indiquant l'absence de signal dans le cas contraire.

2. Récepteur suivant la revendication 1, **caractérisé en ce qu'**il comprend en outre un filtre adapté par code (11) pour fournir des échantillons corrélés (S_{p,p} ... S_{q,q}) du signal entrant (rₚ(k), r_{q}(k)), des moyens (12, 13) pour traiter les échantillons (e(k)) consécutifs, des moyens (15) pour évaluer la moyenne des composantes (V) pi (h) des échantillons des échantillons (e(k)) dans une fenêtre d'égalisation glissante de largeur prédéterminée (W), et des moyens (16) pour évaluer la valeur maximale (max) des groupes d'échantillons significatifs (Z₁(h), ... Z_{L}(h)) sélectionnés.

3. Récepteur suivant la revendication 2, **caractérisé en ce qu'**il comprend un moyen (14) pour fournir les composantes (pi(h)) des échantillons précités en parallèle.

4. Récepteur suivant l'une quelconque des revendications 2 et 3, **caractérisé en ce qu'**il comprend en outre un moyen (20) pour désétaler le signal reçu à l'aide de répliques de code.

5. Récepteur suivant la revendication 4, **caractérisé en ce qu'**il comprend également un générateur de répliques de code (19).

6. Dispositif d'acquisition de code et de détection de signal , **caractérisé en ce qu'**il comprend des moyens (16) agencés pour reconnaître le signal de données reçu en comparant la valeur maximale (max) représentative d'échantillons significatifs (Z₁(h), ... Z_{L}(h)) sélectionnés avec un seuil auto-adaptatif (SATH) généré à partir de la valeur moyenne (aver) des échantillons par multiplication de ladite valeur moyenne (aver) avec un facteur de multiplication fixé (Lambda) afin de produire un signal (SP) ayant un premier état indiquant la présence d'un signal lorsque la valeur maximale (max) est supérieure au seuil auto-adaptatif (SATH) et un second état indiquant l'absence de signal dans le cas contraire.

7. Dispositif suivant la revendication 6, **caractérisé en ce qu'**il comprend en outre un filtre adapté par code (11) pour fournir des échantillons corrélés (S_{p,p} ... S_{q,q}) du signal entrant (rₚ(k), r_{q}(k)), des moyens (12, 13) pour traiter les échantillons (e(k)) consécutifs, des moyens (15) pour évaluer la moyenne des composantes (pi(h)) des échantillons (e(k)) dans une fenêtre d'égalisation glissante de largeur prédéterminée (W), et des moyens (16) pour évaluer la valeur maximale (max) des groupes d'échantillons significatifs (Z₁(h), ... Z_{L}(h)) sélectionnés.

8. Dispositif suivant la revendication 7, **caractérisé en ce qu'**il comprend un moyen (14) pour fournir les composantes (pi(h)) des échantillons précitées en parallèle.

9. Dispositif suivant l'une quelconque des revendications 7 et 8, **caractérisé en ce qu'**il comprend en outre un moyen (20) pour désétaler le signal reçu à l'aide de répliques de code.

10. Dispositif suivant la revendication 9, **caractérisé en ce qu'**il comprend également un générateur de répliques de code (19).

## Claims

1. A receiver for a spread spectrum signal produced by modulating an electrical signal with a binary code, which receiver comprises a sampling circuit (2) for sampling the limited-band signal, a code acquisition and signal detection circuit (3) and a signal demodulator (4),
**characterized in that** the code acquisition and signal detection circuit (3) comprises means (16) configured so as to recognize the received data signal by comparing the maximum value (max) representative of significant samples (Z1(h), ... ZL(h) selected with an auto-adaptive threshold (SATH) generated from the average value (AVER) of the samples by multiplying said average value (AVER) by a fixed multiplication factor (Lambda) so as to produce a signal (SP) having a first state indicating the presence of a signal when the aforesaid maximum value (MAX) is greater than said auto-adaptive threshold (SATH) and a second state indicating the absence of any signal in the contrary case.

2. A receiver according to claim 1, **characterized in that** it further comprises a code adapted filter (11) for delivering correlated samples (Sp,p ... Sq,q) of the incoming signal (rp(k), rq(k)), means (12, 13) for processing the samples in a non-coherent manner and for delivering consecutive samples (e(k)), means (15) for evaluating the average of the components pi(h) of the samples (e(k)) within a sliding equalization window of predetermined width (W), and means (16) for evaluating the maximum value (max) of the groups of significant samples (Z1(h), ... ZL(h)) selected.

3. A receiver according to claim 2, **characterized in that** it comprises a means (14) for delivering the aforesaid components (pi(h) of the samples in parallel.

4. A receiver according to either of claims 2 and 3, **characterized in that** it further comprises a means (20) for unspreading the received signal with the aid of code replicas.

5. A receiver according to claim 4, **characterized in that** it also comprises a generator of code replicas (19).

6. A code acquisition and signal detection device, **characterized in that** it comprises means comprises means (16) configured so as to recognize the received data signal by comparing the maximum value (max) representative of significant samples (Z1(h), ... ZL(h) selected with an auto-adaptive threshold (SATH) generated from the average value (AVER) of the samples by multiplying said average value (AVER) by a fixed multiplication factor (Lambda) so as to produce a signal (SP) having a first state indicating the presence of a signal when the aforesaid maximum value (max) is greater than said auto-adaptive threshold (SATH) and a second state indicating the absence of any signal in the contrary case.

7. A device according to claim 6, **characterized in that** it further comprises a code adapted filter (11) for delivering correlated samples (Sp,p ... Sq,q) of the incoming signal (rp(k), rq(k)), means (12, 13) for processing the samples in a non-coherent manner and for delivering consecutive samples (e(k)), means (15) for evaluating the average of the components pi(h) of the samples (e(k)) within a sliding equalization window of predetermined width (W), and means (16) for evaluating the maximum value (max) of the groups of significant samples (Z1(h), ... ZL(h)) selected.

8. A device according to claim 7, **characterized in that** it comprises a means (14) for delivering the aforesaid components (pi(h)) of the samples in parallel.

9. A device according to either of claims 7 and 8, **characterized in that** it further comprises a means (20) for unspreading the received signal with the aid of code replicas.

10. A device according to claim 9, **characterized in that** it also comprises a generator of code replicas (19).

## Patentansprüche

1. Spreizspektrumsignalempfänger, dessen Spreizspektrum durch Modulation eines elektrischen Signals mit einem binären Code erzeugt wird, umfassend:
eine Probenahmeschaltung (2) zur Bildung von Momentwerten des Signals begrenzter Bandbreite,
eine Codeaufnahme- und Signalfeststellungsschaltung (3) und
ein Signaldemodulator (4),
**dadurch gekennzeichnet,**
**dass** die Codeaufnahme- und Signalfeststellungsschaltung (3) Mittel (16) aufweist, die zum Wiedererkennen des Signals der empfangenen Daten betrieben wird, indem der maximale Wert (max), welcher für ausgewählte, signifikante Probenwerte (Z1(h), ... ZL(h)) repräsentativ ist, mit einer selbsteinstellenden Detektionsschwelle (SATH) verglichen wird, die, ausgehend von einem mittleren Wert (AVER) der Probenwerte, durch Multiplikation des mittleren Wertes (AVER) mit einem festen Multiplikationsfaktor (Lambda) erzeugt wird, um ein Signal (SP) zu erzeugen, welches einen ersten Zustand aufweist, der die Anwesenheit eines Signals anzeigt, wenn der vorerwähnte maximale Wert (max) die selbsteinstellende Detektionsschwelle (SATH) übersteigt, und einen zweiten Zustand aufweist, der die Abwesenheit des Signals im Falle des Gegenteils anzeigt.

2. Empfänger nach Anspruch 1,
**gekennzeichnet durch** folgende weitere Merkmale:
ein **durch** Code adaptiertes Filter (11), um korrelierte Probenwerte (Sp, p ... Sq, q) des Eingangssignals (rp(k), rq(k)) zu liefern, Mittel (12, 13) zur Bearbeitung aufeinander folgender Probenwerte (e(k)), Mittel (15) zur Abschätzung des Mittelwerts der Bestandteile (pi(h)) der Probenwerte (e(k)) in einem gleitenden Ausgleichsfenster vorbestimmter Breite (W) und Mittel (16) zur Abschätzung des maximalen Wertes (max) der Gruppen der ausgewählten, signifikanten Probenwerte (Z1(h), ... ZL(h)).

3. Empfänger nach Anspruch 2,
**dadurch gekennzeichnet, dass** er ein Mittel (14) zur parallelen Lieferung der Bestandteile (pi(h)) der vorgenannten Proben umfasst.

4. Empfänger nach einem der Ansprüche 2 oder 3,
**dadurch gekennzeichnet, dass** er noch ein Mittel (20) zum Entspreizen des empfangenen Signals mit Hilfe von Repliken des Codes umfasst.

5. Empfänger nach Anspruch 4,
**dadurch gekennzeichnet, dass** er ebenfalls einen Generator für Repliken des Codes (19) umfasst.

6. Vorrichtung zur Codeerfassung und Signalfeststellung, **gekennzeichnet durch** folgende Merkmale:
Mittel (16), die zum Wiedererkennen des Signals der empfangenen Daten betrieben werden, in dem der maximale Wert (max), der für ausgewählte, signifikanten Proben (Z1(h), ... ZL(h)) repräsentativ ist, mit einer selbsteinstellenden Detektionsschwelle verglichen wird, die, ausgehend von dem Mittelwert (aver) der Probenwerte, **durch** Multiplikation des Mittelwertes (aver) mit einem festen Multiplikationsfaktor (Lambda) erzeugt werden, um ein Signal (SP) zu erzeugen, das einen ersten Zustand aufweist, der die Anwesenheit eines Signals anzeigt, wenn der maximale Wert (max) oberhalb der selbsteinstellenden Schwelle (SATH) liegt, und einen zweiten Zustand annimmt, der die Abwesenheit des Signals im umgekehrten Fall anzeigt.

7. Vorrichtung nach Anspruch 6,
**gekennzeichnet durch** folgende weitere Merkmale:
ein **durch** Code adaptiertes Filter (11) zur Lieferung von korrelierten Probenwerte (Sp, p ... Sq, q) des Eingangssignals (rp(k), rq(k)) , Mittel (12, 13) zur Bearbeitung aufeinander folgender Proben (e(k)), Mittel (15) zur Abschätzung des Mittelwerts der Bestandteile (pi(h)) der Proben (e(k)) in einem gleitenden Ausgleichsfenster vorbestimmter Breite (W) und Mittel (16) zur Abschätzung des maximalen Wertes (max) der Gruppen ausgewählter, signifikanter Probenwerte (Z1(h), ... ZL(h)).

8. Vorrichtung nach Anspruch 7,
**gekennzeichnet durch** ein Mittel (14) zur parallelen Lieferung der Bestandteile (pi(H)) der vorgenannten Proben.

9. Vorrichtung nach einem der vorhergehenden Ansprüche 7 oder 8, **gekennzeichnet** im übrigen durch ein Mittel (20) zur Entspreizung des empfangenen Signals mit Hilfe von Repliken des Codes.

10. Vorrichtung nach Anspruch 9,
**gekennzeichnet** noch durch einen Codereplikationsgenerator (19).
